(19) **Europäisches Patentamt**
**European Patent Office**
**Office européen des brevets**

(11) **EP 4 242 076 B1**

(12) **EUROPEAN PATENT SPECIFICATION**

(45) Date of publication and mention
of the grant of the patent:
**04.12.2024 Bulletin 2024/49**

(21) Application number: **22382210.7**

(22) Date of filing: **07.03.2022**

(51) International Patent Classification (IPC):
***B60T 8/17*** *(2006.01)* ***B60T 8/32*** *(2006.01)*

(52) Cooperative Patent Classification (CPC):
**B60T 8/1703; B60T 8/325; B60T 13/66;**
**B60T 13/662;** B64C 25/42; B64C 25/426

(54) **BRAKE CONTROL METHOD AND BRAKE CONTROL DEVICE FOR A VEHICLE, SUCH AS AN AIRCRAFT**

BREMSSTEUERUNGSVERFAHREN UND BREMSSTEUERVORRICHTUNG FÜR EIN FAHRZEUG, WIE EIN FLUGZEUG

PROCÉDÉ DE COMMANDE DE FREINAGE ET DISPOSITIF DE COMMANDE DE FREINAGE POUR UN VÉHICULE, TEL QU'UN AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.09.2023 Bulletin 2023/37**

(73) Proprietors:
• **Airbus Defence and Space GmbH**
**82024 Taufkirchen (DE)**
• **Airbus Defence and Space, S.A.**
**28906 Getafe (Madrid) (ES)**

(72) Inventors:
• **González Gago, Alejandro**
**28906 Madrid (ES)**
• **Gandía Barberá, Sergio**
**82024 Taufkirchen (DE)**

(74) Representative: **KASTEL Patentanwälte PartG mbB**
**St.-Cajetan-Straße 41**
**81669 München (DE)**

(56) References cited:
JP-A- 2002 104 278 JP-A- 2007 097 378
US-A- 5 975 656 US-A1- 2015 301 531
US-A1- 2019 016 326

**Description**

The invention relates to a brake control method. The invention further relates to a brake control device for a vehicle, such as an aircraft.

Brake controls are known for example from EP 1 864 878 B1, EP 2 920 070 B1, EP 2 974 957 A1, US 8 147 006 B2, US 7 775 607 B2, and US 5 707 118 A.

US 2015 / 301 531 A1 discloses a landing gear force and moment distributor system for an aircraft having a longitudinal axis aligned in a forward-aft direction, a vertical axis perpendicular to the longitudinal axis, and a landing gear including a pair of bogies arranged symmetrically about the longitudinal axis, each bogie having an actuator arranged to brake and/or drive one or more wheels. The force distribution system includes a distribution module arranged to: receive an input demand including a longitudinal force input demand corresponding to a desired braking or driving force along the longitudinal axis for the landing gear and a moment input demand corresponding to a desired moment about the vertical axis for the landing gear; and to use the received input demand to calculate an output command including, for each bogie, a longitudinal force output command corresponding to a braking or driving force along the longitudinal axis to be applied to the bogie.

A typical aircraft has a landing gear comprising a plurality of wheeled landing gear assemblies which support the aircraft when it is on the ground. A typical tricycle landing gear includes one or more nose landing gear (NLG) assemblies located forwards of the aircraft centre of gravity and a plurality of main landing gear (MLG) assemblies located rearwards of the aircraft centre of gravity. Another typical configuration is a tail wheel landing gear that includes one or more tail landing gear (TLG) assemblies located rearwards of the aircraft centre of gravity and a plurality of main landing gear (MLG) assemblies located forwards of the aircraft centre of gravity. The MLG assemblies are located in a symmetrical configuration with respect to the aircraft longitudinal axis and distributed laterally at a distance from it.

Each MLG assembly includes one or more brakes that can be used for deceleration (also called longitudinal control) and lateral control of the aircraft during ground manoeuvres such as landing, taxiing and take off. The movement of such an aircraft on the ground is determined by control demands issued by the pilot or by a flight control system (FCS). To achieve these control demands, the brake system is required to generate a particular longitudinal force and a yaw moment on the aircraft. The demands from the pilot or the FCS may not be achievable, as the available brake force in each wheel is limited by the maximum brake torque and by the maximum friction force between the respective tyre and the ground.

There are functions in a brake control system that can modulate and/or saturate the brake force in each wheel. An example for these functions is the anti-skid. When the respective brake demand is higher than the maximum friction force in a particular wheel the anti-skid reduces the brake demand to prevent wheel locking and tries to achieve the maximum available brake force.

Most modern anti-skid systems include individual controllers for each braked wheel. In these systems the clamping force of each brake can be individually modulated by the respective anti-skid controller taking into account the slip conditions of the respective wheel. These systems are capable of achieving brake force values very close to the maximum achievable in all wheels. This maximizes the aircraft deceleration capability. However, as each anti-skid controller is independent, the total sum of yaw moments is usually not actively controlled. As a consequence, the total sum of yaw moments generated by all braked wheels may not be the one demanded by the pilot or the Flight Control System.

Other anti-skid systems implement grouped wheel control. These systems use a single anti-skid modulation signal to modulate the braking force of some or all brakes. The single anti-skid modulation signal is usually generated by a single anti-skid controller based on the slip conditions of the wheel with the greatest slip. These systems can control the yaw moment generated by the brake system and therefore prevent unwanted yaw moment.

These control strategies affect the available authority for longitudinal and lateral control of the aircraft on ground. A stakeholder external to the brake system that is aware of the aircraft control needs at each time, like the pilot or a Flight Control System, is required to determine the priority between lateral and longitudinal control.

A need therefore exists for a brake control system capable of adapting the brake control strategy to prioritise the lateral or the longitudinal control depending on an external input. It is the object of the invention to improve a brake control system, preferably with respect to braking performance and simultaneous control authority.

The object is achieved by the subject-matter of the independent claims. Preferred embodiments are subject-matter of the dependent claims.

The invention provides a brake control method for controlling a braking system of a vehicle, preferably an aircraft, the braking system having a plurality of brake device groups, the method comprising:

- a brake control unit receiving a plurality of external brake demand signals each determining a brake target to be achieved by the braking system;
- the brake control unit receiving a priority demand signal that controls priority of a first brake target over a second brake target;

- the brake control unit, if it is determined that not all brake targets can be met simultaneously, generating the brake command signals such that the first brake target or second brake target is prioritized based on the priority demand signal; and
- the brake control unit outputting the brake command signals to the braking system, so as to cause braking and/or steering of the vehicle.

The braking system includes a brake command distributor unit that receives the priority demand signal and each of at least one first internal brake demand signal and each of at least one second internal brake demand signal, wherein the first internal brake demand signal is associated with the first brake target and the second internal brake demand signal is associated with the second brake target, and wherein the brake command distributor unit generates the brake command signals by combining the internal brake demand signals using a weight based on the priority demand signal.

Preferably, the brake command distributor unit determines each braking command signal by multiplying the first internal braking demand signal with a relative weight that is based on a difference of a predetermined value minus the priority demand signal and multiplying the second braking demand signal with the priority demand signal, wherein the brake command signal is the sum of the results of both multiplications.

Preferably, the braking system includes an individual brake control unit that receives the external brake demand signals and generates a plurality of individual brake demand signals each configured to maximize the first brake target, and feeds each individual brake demand signal to the brake command distributor unit as a first internal brake demand signal.

Preferably, the braking system includes a grouped brake control unit that receives the external brake demand signals and the first internal brake demand signals and generates a plurality of grouped brake demand signals each configured to maximize the second brake target, and feeds each group brake demand signal to the brake command distributor unit as a second internal brake demand signal.

Preferably, the grouped brake control unit determines a limiting brake device signal that is indicative of a brake device limiting braking action, generates a first set of brake demands and a second set of brake demands, and outputs the first set of brake demands or the second set of brake demands depending on the limiting brake device signal.

Preferably, the limiting brake device is determined by the grouped brake control unit determining a first brake modifying signal that is the difference between a first external brake demand signal and the first individual brake demand signal, and a second brake modifying signal that is the difference between a second external brake demand signal and the second individual brake demand signal, wherein the limiting brake device signal is determined by the larger of the previously determined differences.

Preferably, a first brake demand signal has as the first brake target a longitudinal deceleration and a second brake demand signal has as the second brake target a yaw moment. Preferably, the priority demand signal is a lateral/longitudinal priority signal. Preferably, if both longitudinal deceleration and yaw moment targets cannot be achieved simultaneously, the brake command signals are generated such that the longitudinal deceleration or the yaw moment is prioritized based on the lateral/longitudinal priority signal.

Preferably, a first brake demand signal has as the first brake target a LH brake demand and a second brake demand signal has as the second brake target a RH brake demand, wherein the priority demand signal is a lateral/longitudinal priority signal. Preferably, the LH brake command signal and the RH brake command signal are generated such that the longitudinal deceleration or the yaw moment is prioritized based on the lateral/longitudinal priority signal.

The invention provides a brake control system for controlling a braking system of a vehicle, preferably an aircraft, the brake control system being configured for performing a previously described method.

The invention provides a computer program containing instructions that, upon execution by a preferred brake control system, cause the brake control system to perform a previously described method.

The invention provides a data storage containing or a data carrier signal transporting the preferred computer program.

The ideas described herein reduce or even eliminate deviations in the vehicle or aircraft trajectory. Furthermore, lateral control authority during braking can be improved. Also, it is possible that the vehicle/aircraft deceleration performance is increased, as the available brake force in the wheels with less slip can be optimally used.

One idea is a brake control system capable of generating individual brake commands based on input brake demands and on an external input selecting the priority of the lateral control axis vs the longitudinal control axis.

In one embodiment, the brake control system includes an individual brake control function, a grouped brake control function and a brake command distributor. When the available brake force is limited and both brake demands cannot be achieved simultaneously, the individual brake control may increase, preferably maximize, the total brake force (which is an example for a first brake target) and may increase the deceleration performance. In the same conditions the grouped brake control function may try to achieve the demanded differential braking yaw moment (which is an example of a second brake target) and may increase the lateral control performance. The brake command distributor can generate the brake commands combining the outputs of the individual and the grouped brake control function taking into account the value of the external lateral/longitudinal priority factor.

In one embodiment, the brake control system can have two external brake demands (Brk_ext_dmd_1, Brk_ext_dmd_2), an external lateral/longitudinal priority demand (Lat_lon_prio_dmd) and generate an amount of n brake commands (Brk_cmd_1, ..., Brk_cmd_n) for an amount of n independently controllable brakes where $n \geq 2$.

The external brake demands (Brk_ext_dmd_1, Brk_ext_dmd_2) may include left hand (LH) / right hand (RH) brake demands, total brake force or yaw moment demands, or any other signal used for the purpose of demanding braking. The parameters used in the external brake demands (Brk_ext_dmd_1, Brk_ext_dmd_2), and the brake commands (Brk_cmd_1, ..., Brk_cmd_n) may be chosen from a group consisting of torques, forces, pressures, currents, voltages or any other parameter used for the purpose of demanding or commanding braking. These parameters may also be absolute values or percentages of a maximum or nominal value.

According to an aspect, the brake control system may generate the brake commands (Brk_cmd_1, ..., Brk_cmd_n) with the target of achieving both external brake demands (Brk_ext_dmd_1, Brk_ext_dmd_2).

If it is not possible to simultaneously achieve both external brake demands, a priority to either longitudinal or lateral control is given depending on the value of the lateral/longitudinal priority factor (Lat_lon_prio_dmd). For values of the Lat_lon_prio_dmd indicative of priority given to longitudinal control, the brake control system increases, preferably maximizes, the achieved total brake force. For values of the Lat_lon_prio_dmd indicative of priority given to lateral control, the brake control system increases, preferably maximizes, the achieved differential braking yaw moment.

If $n > 2$ the brake commands (Brk_cmd_1, ..., Brk_cmd_n) may be generated taking additional considerations into account (e.g. actuator status, generated loads, etc.).

In one embodiment an Individual Brake Control function may generate n brake demands (Brk_indiv_dmd_1, ..., Brk_indiv_dmd_n) based on the external brake demands (Brk_ext_dmd_1 and Brk_ext_dmd_2) with the aim of increasing, preferably maximising, the deceleration performance (as an example of a first brake target).

In one embodiment a grouped brake control function may generate n brake demands (Brk_group_dmd_1, ..., Brk_group_dmd_n) based on the external brake demands (Brk_ext_dmd_1, Brk_ext_dmd_2) and the n individual brake control function brake demands (Brk_indiv_dmd_1, ..., Brk_in-div_dmd_n) with the aim of increasing, preferably maximising, the lateral control performance (as an example of a second brake target).

In one embodiment the brake command distributor function may generate each brake command (Brk_cmd_i) by a weighted combination of the respective individual brake control demand (Brk_indiv_dmd_i) and the respective grouped brake control demand (Brk_group_dmd_i) taking into account the value of the priority factor (Lat_lon_prio_dmd):

Brk_i_cmd = f (Brk_indiv_dmd_i, Brk_group_dmd_i, Lat_lon_prio_dmd)

Preferably, for values of the Lat_lon_prio_dmd equivalent to a high longitudinal priority the relative weight of the respective individual brake control demand (Brk_indiv_dmd_i) in the calculation of each brake command (Brk_cmd_i) may be high and the relative weight of the respective grouped brake control demand (Brk_group_dmd_i) in the calculation of each brake command (Brk_cmd_i) may be low.

Preferably, for values of the Lat_lon_prio_dmd equivalent to a high lateral priority the relative weight of the respective individual brake control demand (Brk_indiv_dmd_i) in the calculation of each brake command (Brk_cmd_i) may be low and the relative weight of the respective grouped brake control demand (Brk_group_dmd_i) in the calculation of each brake command (Brk_cmd_i) may be high.

In one embodiment the brake command distributor generates each brake command (Brk_cmd_i) as a result of a linear combination of the respective individual brake demand (Brk_indiv_dmd_i) and the grouped brake demand (Brk_group_dmd_i) using the lateral/longitudinal priority factor (Lat_lon_prio_dmd):

Brk_cmd_i = Lat_lon_prio_dmd * Brk_group_dmd_i + (1- Lat_lon_prio_dmd) * Brk_indiv_dmd_i, $0 \leq$ Lat_lon_prio_dmd $\leq 1$.

where
$0 \leq$ Lat_lon_prio_dmd $\leq 1$.

Consequently Lat_lon_prio_dmd = 0 indicates a maximum longitudinal priority demand and Lat_lon_prio_dmd = 1 indicates maximum lateral priority demand. The Lat_lon_prio_dmd can take values in between. Values in between indicate mixed demands for longitudinal and lateral priority, with Lat_lon_prio_dmd = 0.5 indicating equal priority for lateral and longitudinal demands.

In one embodiment the number of independently controlled brakes n = 2 and the brakes are preferably arranged symmetrically with respect to the aircraft longitudinal axis. The brake located to the left of the aircraft longitudinal axis is designated LH brake. The brake located to the right of the aircraft longitudinal axis is designated RH brake.

In one embodiment the grouped brake control function uses the external brake demands (Brk_ext_dmd_LH, Brk_ext_dmd_RH) and the individual brake control demands (Brk_indiv_dmd_LH, Brk_indiv_dmd_RH) to generate the grouped brake control demands (Brk_group_dmd_LH, Brk_group_dmd_RH).

In one embodiment the difference (Delta_brk_dmd) between both external brake demands is calculated as the LH external brake demand (Brk_ext_dmd_LH) minus the RH external brake demand (Brk_ext_dmd_RH):

$$\texttt{Delta\_brk\_dmd = Brk\_ext\_dmd\_LH - Brk\_ext\_dmd\_RH}$$

In one embodiment brake demand modulation signals for the LH and RH brake (Brk_mod_sig_LH, Brk_mod_sig_RH) are calculated as the respective external brake demand minus the respective individual brake control demands:

$$\texttt{Brk\_mod\_sig\_LH = Brk\_ext\_dmd\_LH - Brk\_indiv\_dmd\_LH}$$

$$\texttt{Brk\_mod\_sig\_RH = Brk\_ext\_dmd\_RH - Brk\_indiv\_dmd\_RH}$$

In one embodiment the brake with the highest value of the brake demand modulation signal is determined to be the limiting or lead brake.

In one embodiment the grouped brake control function generates two sets of brake demands. The A demand set is valid when the RH brake is the lead brake. The B demand set is valid when the LH brake is the lead brake.

In one embodiment the RH brake demand of the A set (Brk_dmd_A_RH) is equal to the RH individual brake demand (Brk_indiv_dmd_RH). In one embodiment the LH brake demand of the A set (Brk_dmd_A_LH) is equal to the RH individual brake demand (Brk_indiv_dmd_RH) plus the delta brake demand (Delta_brk_dmd).

In one embodiment the LH brake demand of the B set (Brk_dmd_B_LH) is equal to the LH individual brake demand (Brk_indiv_dmd_LH). In one embodiment the RH brake demand of the B set (Brk_dmd_B_RH) is equal to the LH individual brake demand (Brk_indiv_dmd_LH) minus the delta brake demand (Delta_brk_dmd).

In one embodiment a saturation low value of zero is used in both brake demands of each set to avoid brake demand values lower than zero (negative brake demands).

In one embodiment, if the value of the Brk_mod_sig_LH is less than the Brk_mod_sig_RH the RH brake is the limiting or lead brake. In this case the lead brake toggle switch may equal the grouped brake demands to the A demand set:

$$\texttt{Brk\_group\_dmd\_LH = Brk\_dmd\_A\_LH}$$

$$\texttt{Brk\_group\_dmd\_RH = Brk\_dmd\_A\_RH}$$

In one embodiment, if the value of the Brk_mod_sig_LH is greater than the Brk_mod_sig_RH the LH brake is the limiting or lead brake. In this case the lead brake toggle switch may equal the grouped brake demands to the B demand set:

$$\texttt{Brk\_group\_dmd\_LH = Brk\_dmd\_B\_LH}$$

$$\texttt{Brk\_group\_dmd\_RH = Brk\_dmd\_B\_RH}$$

In one embodiment, if the value of the Brk_mod_sig_LH is equal to the Brk_mod_sig_RH both brakes are equally limiting. In this case the lead brake toggle switch equals the grouped brake demands either to the A or to the B demand set, as both demand sets have the same value.

The ideas discussed herein belong to the technical field of landing gears. They are applicable to brake control systems of both manned and unmanned aircraft. It is also possible to apply these ideas to vehicles on the ground in general.

Embodiments of the invention are described in more detail with reference to the accompanying schematic drawings that are listed below

Fig. 1  depicts an embodiment of an aircraft;
Fig. 2  depicts an embodiment of a brake control system;
Fig. 3  depicts an embodiment of a brake control unit;
Fig. 4  depicts an embodiment of a brake command distributor unit; and
Fig. 5  depicts an embodiment of a grouped brake control unit.

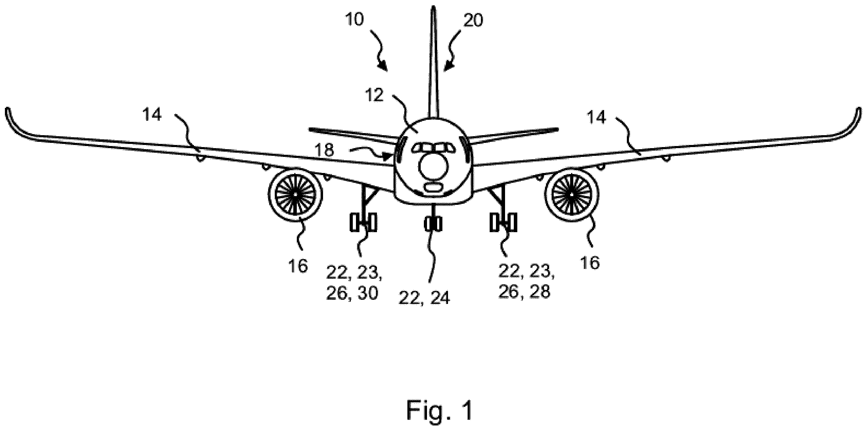

Referring to Fig. 1 an aircraft 10 comprises a fuselage 12. The aircraft 10 has a pair of wings 14 attached to the fuselage 12. Furthermore, there is a pair of engines 16 each of which is attached to a wing 14. The fuselage 12 comprises a cockpit section 18 at the front and a tail plane section 20 on the back.

The aircraft 10 comprises a plurality of landing gears 22. The aircraft 10 has a nose landing gear (NLG) 24 that is attached to the fuselage 12 at the or near the cockpit section 18. The NLG 24 is arranged in front of the centre of gravity of the aircraft 10 along its longitudinal axis.

Furthermore, the aircraft 10 comprises a pair of main landing gears (MLGs) 26 that are arranged at the wings 14. The MLGs 26 are arranged aft of the centre of gravity of the aircraft 10 along its lateral axis. In a typical manner, the MLGs 26 comprise a left hand (LH) main landing gear 28 and a right hand (RH) main landing gear 30. Each main landing gear 26 has a separate group 23 of brake devices that are controllable individually or as a group.

The aircraft 10 comprises a brake control system 32 that is arranged to control the brake devices of the main landing gears 26.

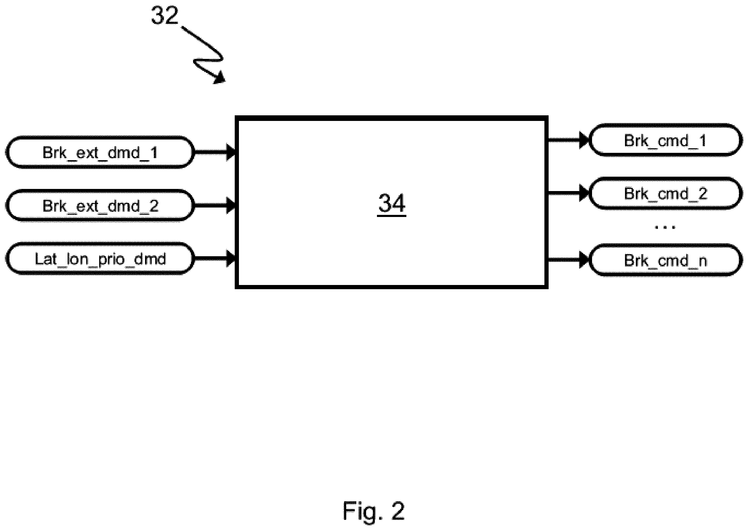

Referring to Fig. 2, the brake control system 32 comprises a brake control unit 34. The brake control unit 34 receives as input a first external brake demand Brk_ext_dmd_1 and a second external brake demand Brk_ext_dmd_2.

Furthermore, the brake control unit 34 receives a priority demand prio_dmd. Subsequently, the priority demand prio_dmd is illustrated with a lateral longitudinal priority demand Lat_lon_prio_dmd. It should be noted that the invention is not limited thereto. The lateral longitudinal priority demand Lat_lon_prio_dmd determines to which amount the first external brake demand Brk_ext_dmd_1 is prioritized over the second external brake demand Brk_ext_dmd_2, when predetermined conditions are met.

The brake control unit 34 generates a brake command Brk_cmd_i for each group 23 of brake devices or even for each brake device individually (i designates the i-th group or brake device). Each brake command Brk_cmd_i is indicative of the braking force, for example, to be exerted by each group 23 or each individual brake device, as the case may be.

The brake commands Brk_cmd_i are generated such that the first and second external brake demands Brk_ext_dmd_1, Brk_ext_dmd_2 are met simultaneously. If the brake control unit 34 during the braking process determines that it is not possible to achieve the first and second brake demands Brk_ext_dmd_1, Brk_ext_dmd_2 simultaneously, e.g. due to limited available tyre friction, the brake control unit 34 generates each brake command Brk_cmd_i such that the first external brake demand Brk_ext_dmd_1 is prioritized the more over the second external brake demand Brk_ext_dmd_2 the larger the priority demand Lat_lon_prio_dmd is.

In other words the brake control unit 34 generates the brake commands Brk_cmd_i such that the first external brake demand Brk_ext_dmd_1 is achieved to a larger degree or even met in full as determined by the priority demand Lat_lon_prio_dmd, whereas the second external brake demand Brk_ext_dmd_2 is achieved to a lesser degree or even ignored as determined by the priority demand Lat_lon_prio_dmd.

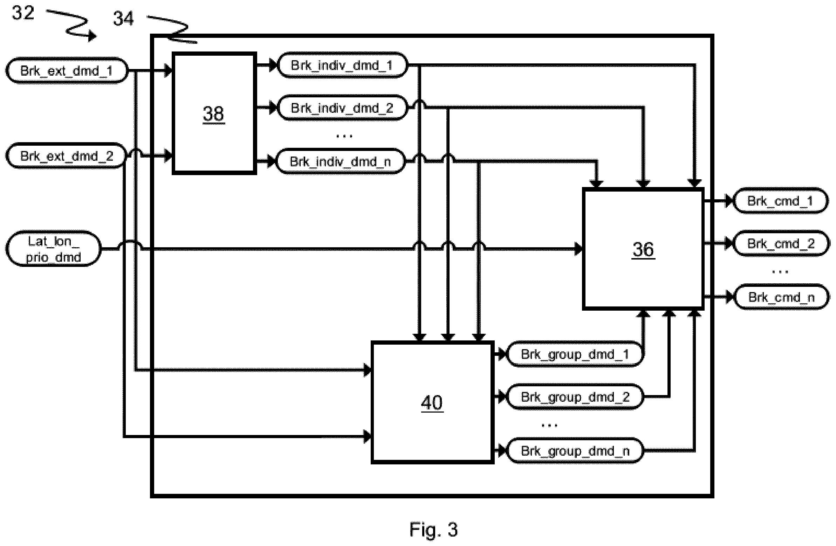

Referring to Fig. 3, the brake control unit 34 may comprise a brake command distributor unit 36. The brake command distributor unit 36 receives various internal brake demands, such as the individual brake demands Brk_indiv_dmd_i and the grouped brake demands Brk_group_dmd_i , and the lateral longitudinal priority demand Lat_lon_prio_dmd. The brake command distributor unit 36 generates the brake commands Brk_cmd_i based on the various brake demands and the priority demand Lat_lon_prio_dmd.

The brake control unit 34 may comprise an individual brake control unit 38. The individual brake control unit 38 receives the first and second external brake demands Brk - ext - dmd _1, Brk_ext_dmd_2 and generates the individual brake demands Brk_indiv_dmd_i. The individual brake demands Brk_indiv_dmd_i are generated to maximize a first brake target, e.g. longitudinal deceleration. The individual brake demands Brk_indiv_dmd_i are fed to the brake command distributor unit 36 which processes them in generating the brake commands Brk_cmd_i.

The brake control unit 34 may comprise a grouped brake control unit 40. The grouped brake control unit 40 receives the first and second external brake demands Brk_ext_dmd_1, Brk_ext_dmd_2 and generates the grouped brake demands Brk_group_dmd_i. The grouped brake control unit 40 may also receive the individual brake demands Brk_indiv_dmd_i. The group brake demands Brk_group_dmd_i are generated to maximize a second brake target, e.g. yaw moment or lateral control. The grouped brake demands Brk_group_dmd_i are fed to the brake command distributor unit 36 which processes them in generating the brake commands Brk_cmd_i.

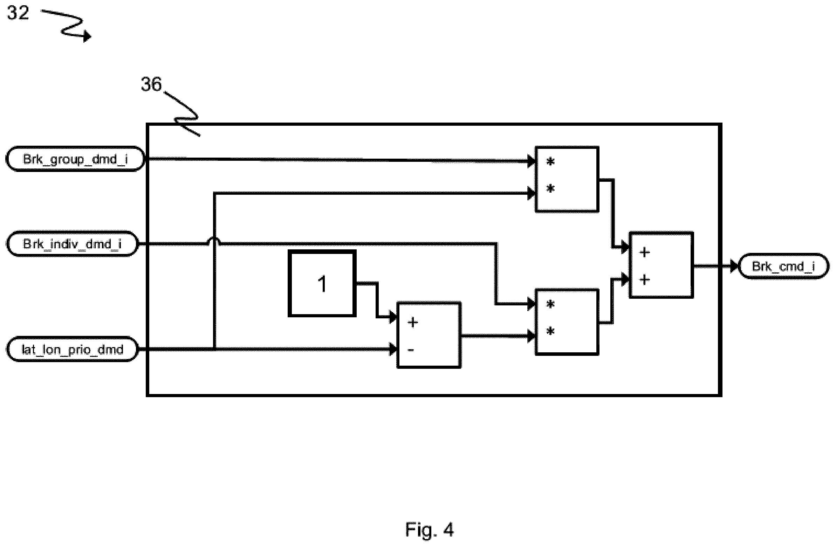

Referring to Fig. 4, the brake command distributor 36 processes for each individual brake device an individual brake demand Brk_indiv_dmd_i for that individual brake device and a grouped brake demand Brk_group_dmd_i for the group 23 to which that brake device belongs. Furthermore, the brake command distributor 36 receives the priority demand Lat_lon_prio_dmd. It should be noted that, as described before, the value of the priority demand Lat_lon_prio_dmd is from 0 to 1. The brake command distributor 36 combines the received signals according to the following formula:

$$Brk\_cmd\_1 = (1 - Lat\_lon\_prio\_dmd) * Brk\_indiv\_dmd\_i + Lat\_lon\_prio\_dmd * Brk\_group\_dmd\_1$$

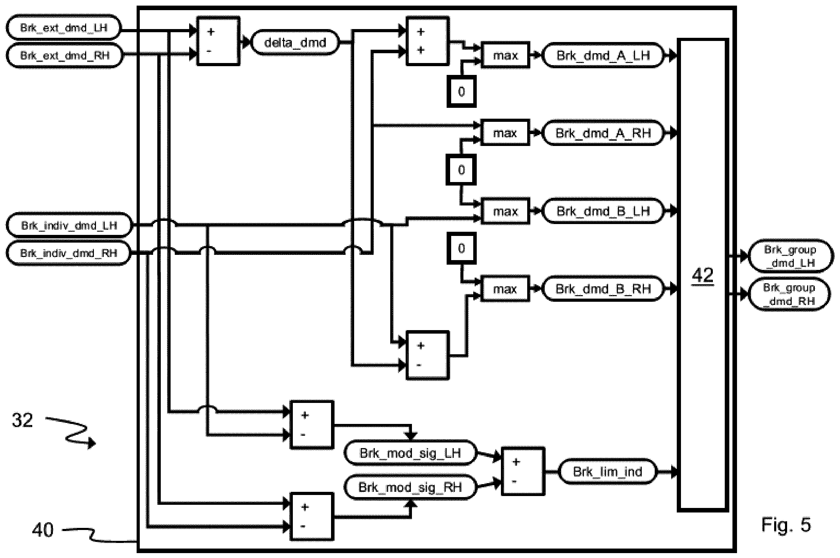

Referring to Fig. 5, the grouped brake control unit 40 may include a lead brake toggle switch 42.

The lead brake toggle switch 42 is configured to determine the brake group demands Brk_group_dmd_i, based on a lead or limiting brake. The lead brake toggle switch 42 determines the limiting brake that is going to limit the brake action and outputs the corresponding brake group demands Brk_group_dmd_i, for maximizing the demanded braking action, e.g. the second brake target.

The grouped brake control unit 40 receives the first and second external brake demands Brk_ext_dmd_1, Brk_ext_dmd_2, which may be brake demands for the LH and RH main landing gears 28, 30, respectively. Subsequently, and for illustration purposes only, the first and second external brake demands Brk_ext_dmd_1, Brk_ext_dmd_2 are referred to as left hand and right hand external brake demands Brk_ext_dmd_LH, Brk_ext_dmd_RH.

Furthermore, the grouped brake control unit 40 receives a first and second individual brake demand Brk_indiv_dmd_1, Brk_indiv_dmd_2, which also refers to the LH and RH landing gears 28, 30, respectively. Subsequently, and for illustration purposes only, the first and second individual brake demands Brk_in-div_dmd_1, Brk_indiv_dmd_2 are referred to as left hand and right hand individual brake demands Brk_indiv_dmd_LH, Brk_indiv_dmd_RH.

From this, the grouped brake control unit 40 determines a left hand brake modulation signal Brk_mod_sig_LH and a right hand brake modulation signal Brk_mod_sig_RH.

The left hand brake modulation signal Brk_mod_sig_LH is determined as the difference of the left hand external brake demand Brk_ext_dmd_LH and the left hand individual brake demand Brk_indiv_dmd_LH, i.e. Brk_mod_sig_LH = Brk_ext_dmd_LH - Brk_indiv_dmd_LH.

The right hand brake modulation signal Brk_mod_sig_RH is determined as the difference of the right hand external brake demand Brk_ext_dmd_RH and the right hand individual brake demand Brk_indiv_dmd_RH, i.e.

$$Brk\_mod\_sig\_RH = Brk\_ext\_dmd\_RH - Brk\_indiv\_dmd\_RH.$$

The grouped brake control unit 40 may determine a limit brake indication value Brk_lim_ind that indicates the limiting brake. The limit brake indication value Brk_lim_ind is determined by subtracting the right hand brake modulation signal Brk_mod_sig_RH from the left hand brake modulation signal Brk_mod_sig_LH. If the limit brake indication value Brk_lim_ind is greater than zero, the brake associated with the left hand external brake demand Brk_ext_dmd_LH and the left hand individual brake demand Brk_in-div_dmd_LH, is determined to be the limiting brake otherwise it is the brake associated with the right hand external brake demand Brk_ext_dmd_RH and the right hand individual brake demand Brk_indiv_dmd_RH.

In general, i.e. in case of a configuration with more than two brakes, it is noted that the brake that is associated with the largest brake modulation signal is determined to be the limiting brake.

The grouped brake control unit 40 determines a first set of brake demands Brk_dmd_A and a second set of brake demands Brk _dmd_B.

Initially, the grouped brake control unit 40 determines a difference between the left hand external brake demand Brk_ext_dmd_LH and the right hand external brake demand Brk_ext_dmd_RH that is designated delta_brk_dmd and determined according to delta_brk_dmd = Brk_ext_dmd_LH - Brk_ext_dmd_RH.

The first set of brake demands Brk_dmd_A includes a left hand internal brake demand Brk_dmd_A_LH and a right hand internal brake demand Brk_dmd_A_RH. The left hand internal brake demand Brk_dmd_A_LH is determined to be the sum of the right hand individual brake demand Brk_in-div_dmd_RH and delta_brk_dmd. If for some reason the sum is smaller than zero, the left hand internal brake demand Brk_dmd_A_LH is set to zero, i.e. there is no negative brake demand.

The right hand internal brake demand Brk_dmd_A_RH is determined to be the maximum of 0 and the right hand individual brake demand Brk_in-div_dmd_RH, i.e. there is no negative brake demand.

The second set of brake demands Brk_dmd_B includes a left hand internal brake demand Brk_dmd_B_LH and a right hand internal brake demand Brk_dmd_B_RH.

The left hand internal brake demand Brk_dmd_B_LH is determined to be the maximum of 0 and the left hand individual brake demand Brk_in-div_dmd_LH, i.e. there is no negative brake demand.

The right hand internal brake demand Brk_dmd_B_RH is determined to be the difference of the left hand individual brake demand Brk_indiv_dmd_LH and delta_brk_dmd, such that Brk_dmd_B_RH = Brk_indiv_dmd_LH - delta_brk_dmd. If for some reason the difference is zero or negative, the right hand internal brake demand Brk_dmd_B_RH is set to zero.

The lead brake toggle switch 42 receives the sets of internal brake demands Brk_dmd_A and Brk_dmd_B as well as the difference of the brake modulation signals Brk_mod_sig_LH and Brk_mod_sig_RH. The lead brake toggle switch 42 determines the limiting brake as previously described. If the left hand brake is determined to be the limiting one the lead brake toggle switch 42 outputs the second set of brake demands Brk_dmd_B as the left hand and right hand brake group demand Brk_group_dmd_LH, Brk_group_dmd_RH for further processing by the brake command distributor unit 36. Otherwise the lead brake toggle switch 42 outputs the first set of brake demands Brk_dmd_A as the left hand and right hand brake group demand Brk_group_dmd_LH, Brk_group_dmd_RH for further processing by the brake command distributor unit 36.

In order to enable an improved braking performance and simultaneous control authority in braking systems, especially for aircraft (10), the invention proposes a brake control method for controlling a braking system of a vehicle, preferably an aircraft (10). The aircraft (10) has a plurality of brake device groups (23), and a brake control unit (34) receives a plurality of external brake demand signals each of which determines a brake target, such as longitudinal deceleration and/or lateral control. Furthermore, a priority demand signal that controls priority controls the priority or importance of the first brake target over the second brake target. If it is not possible to achieve longitudinal deceleration and lateral control authority simultaneously, one of the two is prioritized with an amount that is given by the priority demand signal.

**List of reference signs:**

| | |
|---|---|
| 10 | aircraft |
| 12 | fuselage |
| 14 | wing |
| 16 | engine |
| 18 | cockpit section |
| 20 | tail plane section |
| 22 | landing gear |
| 23 | group of brake devices |
| 24 | nose landing gear (NLG) |
| 26 | main landing gears (MLGs) |
| 28 | left hand (LH) main landing gear |
| 30 | right hand (RH) main landing gear |
| 32 | brake control system |
| 34 | brake control unit |
| 36 | brake command distributor unit |
| 38 | individual brake control unit |
| 40 | grouped brake control unit |
| 42 | lead brake toggle switch |

**Claims**

1. A brake control method for controlling a braking system of a vehicle, the braking system having a plurality of brake device groups (23), the method comprising:

   - a brake control unit (34) receiving a plurality of external brake demand signals each determining a brake target to be achieved by the braking system;
   - the brake control unit (34) receiving an external priority demand signal that controls priority of a first brake target over a second brake target;
   - the brake control unit (34), if it is determined that not all brake targets can be met simultaneously, generating the brake command signals such that the first brake target or second brake target is prioritized based on the priority demand signal; and
   - the brake control unit (34) outputting the brake command signals to the braking system, so as to cause braking and/or steering of the vehicle,

**characterized in that** the braking system includes a brake command distributor unit (36) that receives the priority demand signal and each of at least one first internal brake demand signal and each of at least one second internal brake demand signal, wherein the first internal brake demand signal is associated with the first brake target and the second internal brake demand signal is associated with the second brake target, and wherein the brake command distributor unit (36) generates the brake command signals by combining the internal brake demand signals using a weight based on the priority demand signal.

2. The method according to claim 1, wherein the brake command distributor unit (36) determines each braking command signal by multiplying one first internal braking demand signal with a relative weight that is based on a difference of a predetermined value minus the priority demand signal and multiplying one second braking demand signal with the priority demand signal, wherein the brake command signal is the sum of the results of both multiplications.

3. The method according to any of the claims 1 or 2, wherein the braking system includes an individual brake control unit (38) that receives the external brake demand signals and generates a plurality of individual brake demand signals each configured to maximize the first brake target, and feeds each individual brake demand signal to the brake command distributor unit as first internal brake demand signals.

4. The method according any of the preceding claims 1 to 3, wherein the braking system includes a grouped brake control unit (40) that receives the external brake demand signals and the first internal brake demand signals and generates a plurality of grouped brake demand signals each configured to maximize the second brake target, and feeds each group brake demand signal to the brake command distributor unit (36) as second internal brake demand signals.

5. The method according to claim 4, wherein the grouped brake control unit (40) determines a limiting brake device signal that is indicative of a brake device that limits braking action, generates a first set of brake demands and a second set of brake demands, and outputs the first set of brake demands or the second set of brake demands depending on the limiting brake device signal.

6. The method according to claim 5, wherein the limiting brake device is determined by the grouped brake control unit (40) by determining a first brake modifying signal that is the difference between a first external brake demand signal and the first individual brake demand signal, and a second brake modifying signal that is the difference between a second external brake demand signal and the second individual brake demand signal, wherein the limiting brake device signal is determined by the larger of the previously determined differences.

7. The method according to any of the preceding claims, wherein a first brake demand signal has as the first brake target a longitudinal deceleration and a second brake demand signal has as the second brake target a yaw moment, wherein the priority demand signal is a lateral/longitudinal priority signal, and wherein, if both longitudinal deceleration and yaw moment targets cannot be achieved simultaneously, the brake command signals are generated such that the longitudinal deceleration or the yaw moment is prioritized based on the lateral/longitudinal priority signal.

8. The method according to any of the preceding claims, wherein a first brake demand signal has as the first brake target a LH brake demand and a second brake demand signal has as the second brake target a RH brake demand, wherein the priority demand signal is a lateral/longitudinal priority signal, and wherein the LH brake command signal and the RH brake command signal are generated such that the longitudinal deceleration or the yaw moment is prioritized based on the lateral/longitudinal priority signal.

9. A brake control system for controlling a braking system of a vehicle, preferably an aircraft (10), the brake control system being configured for performing a method according to any of the preceding claims.

10. A computer program containing instructions that, upon execution by a brake control system according to claim 9, cause the brake control system to perform a method according to any of the claims 1 to 8.

11. A data storage containing or a data carrier signal transporting the computer program according to claim 10.

**Patentansprüche**

1. Bremssteuerungsverfahren zum Steuern eines Bremssystems eines Fahrzeugs, wobei das Bremssystem eine Vielzahl von Bremsvorrichtungsgruppen (23) aufweist, das Verfahren Folgendes umfassend:

- eine Bremssteuerungseinheit (34), die eine Vielzahl von externen Bremsanforderungssignalen empfängt, die jeweils ein Bremsziel bestimmen, das durch das Bremssystem erzielt werden soll;
- die Bremssteuerungseinheit (34), die ein externes Prioritätsanforderungssignal empfängt, das eine Priorität eines ersten Bremsziels gegenüber einem zweiten Bremsziel steuert;
- die Bremssteuerungseinheit (34), die, wenn bestimmt wird, dass nicht alle Bremsziele gleichzeitig erfüllt werden können, die Bremsbefehlssignale erzeugt, so dass das erste Bremsziel oder das zweite Bremsziel auf Grundlage des Prioritätsanforderungssignals priorisiert wird; und
- die Bremssteuerungseinheit (34), welche die Bremsbefehlssignale an das Bremssystem ausgibt, um ein Bremsen und/oder Lenken des Fahrzeugs zu bewirken,

**dadurch gekennzeichnet, dass** das Bremssystem eine Bremsbefehlsverteilereinheit (36) umfasst, die das Prioritätsanforderungssignal und jedes von mindestens einem ersten internen Bremsanforderungssignal und jedes von mindestens einem zweiten internen Bremsanforderungssignal empfängt, wobei das erste interne Bremsanforderungssignal dem ersten Bremsziel zugeordnet ist und das zweite interne Bremsanforderungssignal dem zweiten Bremsziel zugeordnet ist und wobei die Bremsbefehlsverteilereinheit (36) die Bremsbefehlssignale durch Kombinieren der internen Bremsanforderungssignale unter Verwendung einer Gewichtung auf der Grundlage des Prioritätsanforderungssignals erzeugt.

2. Verfahren nach Anspruch 1, wobei die Bremsbefehlsverteilereinheit (36) jedes Bremsbefehlssignal durch Multiplizieren eines ersten internen Bremsanforderungssignals mit einer relativen Gewichtung, die auf einer Differenz eines vorbestimmten Werts abzüglich des Prioritätsanforderungssignals basiert, und durch Multiplizieren eines zweiten Bremsanforderungssignals mit dem Prioritätsanforderungssignal bestimmt, wobei das Bremsbefehlssignal die Summe der Ergebnisse beider Multiplikationen ist.

3. Verfahren nach einem der Ansprüche 1 oder 2, wobei das Bremssystem eine individuelle Bremssteuerungseinheit (38) umfasst, welche die externen Bremsanforderungssignale empfängt und eine Vielzahl von individuellen Bremsanforderungssignalen erzeugt, die jeweils eingerichtet sind, um das erste Bremsziel zu maximieren, und jedes individuelle Bremsanforderungssignal als erste interne Bremsanforderungssignale der Bremsbefehlsverteilereinheit zuführt.

4. Verfahren nach einem der vorhergehenden Ansprüche 1 bis 3, wobei das Bremssystem eine Gruppenbremssteuerungseinheit (40) umfasst, welche die externen Bremsanforderungssignale und die ersten internen Bremsanforderungssignale empfängt und eine Vielzahl von Gruppenbremsanforderungssignalen erzeugt, die jeweils eingerichtet sind, um das zweite Bremsziel zu maximieren, und jedes Gruppenbremsanforderungssignal als zweite interne Bremsanforderungssignale der Bremsbefehlsverteilereinheit (36) zuführt.

5. Verfahren nach Anspruch 4, wobei die Gruppenbremssteuerungseinheit (40) ein Begrenzungsbremsvorrichtungssignal bestimmt, das eine Bremsvorrichtung anzeigt, die eine Bremswirkung begrenzt, einen ersten Satz Bremsanforderungen und einen zweiten Satz Bremsanforderungen erzeugt und den ersten Satz Bremsanforderungen oder den zweiten Satz Bremsanforderungen in Abhängigkeit von dem Begrenzungsbremsvorrichtungssignal ausgibt.

6. Verfahren nach Anspruch 5, wobei die Begrenzungsbremsvorrichtung durch die Gruppenbremssteuerungseinheit (40) durch Bestimmen eines ersten Bremsmodifizierungssignals, das die Differenz zwischen einem ersten externen Bremsanforderungssignal und dem ersten individuellen Bremsanforderungssignal ist, und eines zweiten Bremsmodifizierungssignals, das die Differenz zwischen einem zweiten externen Bremsanforderungssignal und dem zweiten individuellen Bremsanforderungssignal ist, wobei das Begrenzungsbremsvorrichtungssignal durch die größere der zuvor bestimmten Differenzen bestimmt wird.

7. Verfahren nach einem der vorhergehenden Ansprüche, wobei ein erstes Bremsanforderungssignal als das erste Bremsziel eine Längsverzögerung aufweist und ein zweites Bremsanforderungssignal als das zweite Bremsziel ein Giermoment aufweist, wobei das Prioritätsanforderungssignal ein Quer-/Längsprioritätssignal ist, und wobei, wenn sowohl Längsverzögerungs- als auch Giermomentziele nicht gleichzeitig erzielt werden können, die Bremsbefehlssignale derart erzeugt werden, dass die Längsverzögerung oder das Giermoment auf Grundlage des Quer-/Längsprioritätssignals priorisiert wird.

8. Verfahren nach einem der vorhergehenden Ansprüche, wobei ein erstes Bremsanforderungssignal als das erste Bremsziel eine LH-Bremsanforderung aufweist und ein zweites Bremsanforderungssignal als das zweite Bremsziel eine RH-Bremsanforderung aufweist, wobei das Prioritätsanforderungssignal ein Quer-/Längsprioritätssignal ist, und wobei das LH-Bremsbefehlssignal und das RH-Bremsbefehlssignal derartig erzeugt werden, dass die Längsverzögerung oder das Giermoment auf Grundlage des Quer-/Längsprioritätssignals priorisiert wird.

9. Bremssteuerungssystem zum Steuern eines Bremssystems eines Fahrzeugs, vorzugsweise eines Flugzeugs (10), wobei das Bremssteuerungssystem zum Durchführen eines Verfahrens nach einem der vorhergehenden Ansprüche eingerichtet ist.

10. Computerprogramm, das Befehle enthält, die bei Ausführung durch ein Bremssteuerungssystem nach Anspruch 9 bewirken, dass das Bremssteuerungssystem ein Verfahren nach einem der Ansprüche 1 bis 8 durchführt.

11. Datenspeicher, der das Computerprogramm nach Anspruch 10 enthält, oder Datenträgersignal, welches das Computerprogramm nach Anspruch 10 transportiert.

## Revendications

1. Procédé de commande de frein pour commander un système de freinage d'un véhicule, le système de freinage ayant une pluralité de groupes de dispositifs de frein (23), le procédé comprenant :

   - une unité de commande de frein (34) recevant une pluralité de signaux de demande de frein externe, chacun déterminant une cible de frein devant être accomplie par le système de freinage ;
   - l'unité de commande de frein (34) recevant un signal de demande de priorité externe qui commande une priorité d'une première cible de frein par rapport à une seconde cible de frein ;
   - l'unité de commande de frein (34), s'il est déterminé qu'il n'est pas possible de respecter toutes les cibles de frein simultanément, générant les signaux de consigne de frein de telle manière que la priorité est donnée à la première cible de frein ou à la seconde cible de frein sur la base du signal de demande de priorité ; et
   - l'unité de commande de frein (34) envoyant en sortie les signaux de consigne de frein au système de freinage, afin d'entraîner le freinage et/ou l'orientation du véhicule,

   **caractérisé en ce que** le système de freinage inclut une unité distributrice de consigne de frein (36) qui reçoit le signal de demande de priorité et chacun d'au moins un premier signal de demande de frein interne et chacun d'au moins un second signal de demande de frein interne, dans lequel le premier signal de demande de frein interne est associé à la première cible de frein et le second signal de demande de frein interne est associé à la seconde cible de frein, et dans lequel l'unité distributrice de consigne de frein (36) génère les signaux de consigne de frein en combinant les signaux de consigne de frein interne en utilisant un poids sur la base du signal de demande de priorité.

2. Procédé selon la revendication 1, dans lequel l'unité distributrice de consigne de frein (36) détermine chaque signal de consigne de freinage en multipliant un premier signal de demande de freinage interne avec un poids relatif qui est sur la base d'une différence d'une valeur pré¬déterminée moins le signal de demande de priorité et en multipliant un second signal de demande de freinage avec le signal de demande de priorité, dans lequel le signal de consigne de frein est la somme des résultats des deux multiplications.

3. Procédé selon de quelconques des revendications 1 ou 2, dans lequel le système de freinage inclut une unité de commande de frein individuelle (38) qui reçoit les signaux de demande de frein externe et génère une pluralité de signaux de demande de frein individuelle, chacun configuré pour maximiser la première cible de frein, et fournit chaque signal de demande de frein individuelle à l'unité distributrice de consigne de frein en tant que premiers signaux de demande de frein interne.

4. Procédé selon quelconques des revendications précédentes 1 à 3, dans lequel le système de freinage inclut une unité de commande de frein groupée (40) qui reçoit les signaux de demande de frein externe et les premiers signaux de demande de frein interne et génère une pluralité de signaux de demande de frein groupée, chacun configuré pour maximiser la seconde cible de frein, et fournit chaque signal de demande de frein groupée à l'unité distributrice de consigne de frein (36) en tant que seconds signaux de demande de frein interne.

5. Procédé selon la revendication 4, dans lequel l'unité de commande de frein groupée (40) détermine un signal de dispositif de frein limiteur qui est indicatif d'un dispositif de frein qui limite l'action de freinage, génère un premier ensemble de demandes de frein et un second ensemble de demandes de frein, et produit en sortie le premier ensemble de demandes de frein ou le second ensemble de demandes de frein en fonction du signal de dispositif de frein limiteur.

6. Procédé selon la revendication 5, dans lequel le dispositif de frein limiteur est déterminé par l'unité de commande de frein groupée (40) en déterminant un premier signal de modification de frein qui est la différence entre un premier signal de demande de frein externe et le premier signal de demande de frein individuelle, et un second signal de modification de frein qui est la différence entre un second signal de demande de frein externe et le second signal de demande de frein individuelle, dans lequel le signal de dispositif de frein limiteur est déterminé par la plus grande des différences déterminées auparavant.

7. Procédé selon quelconques des revendications précédentes, dans lequel un premier signal de demande de frein a, en tant que première cible de frein, une décélération longitudinale, et un second signal de demande de frein a, en tant que seconde cible de frein, un moment de lacet, dans lequel le signal de demande de priorité est un signal de priorité latérale/longitudinale, et dans lequel, s'il n'est pas possible d'accomplir les deux cibles de décélération longitudinale et de moment de lacet simultanément, les signaux de consigne de frein sont générés de telle manière que la priorité est donnée à la décélération longitudinale ou au moment de lacet sur la base du signal de priorité latérale/longitudinale.

8. Procédé selon quelconques des revendications précédentes, dans lequel un premier signal de demande de frein a, en tant que première cible de frein, une demande de frein LH et un second signal de demande de frein a, en tant que seconde cible de frein, une demande de frein RH, dans lequel le signal de demande de priorité est un signal de priorité latérale/longitudinale, et dans lequel le signal de consigne de frein LH et le signal de consigne de frein RH sont générés de telle manière que la priorité est donnée à la décélération longitudinale ou au moment de lacet sur la base du signal de priorité latérale/longitudinale.

9. Système de commande de frein pour commander un système de freinage d'un véhicule, de préférence un aéronef (10), le système de commande de frein étant configuré pour réaliser un procédé selon de quelconques des revendications précédentes.

10. Programme informatique contenant des instructions qui, lors de l'exécution par un système de commande de frein selon la revendication 9, amènent le système de commande de frein à réaliser un procédé selon de quelconques des revendications 1 à 8.

11. Stockage de données, contenant ou un signal porteur de données transportant le programme informatique selon la revendication 10.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1864878 B1
- EP 2920070 B1
- EP 2974957 A1
- US 8147006 B2
- US 7775607 B2
- US 5707118 A
- US 2015301531 A1